# EUROPÄISCHE PATENTSCHRIFT

(11) **EP 2 207 696 B1**
(45) Veröffentlichungstag und Bekanntmachung des Hinweises auf die Patenterteilung: **22.05.2019**
(21) Anmeldenummer: 08804768.3
(22) Anmeldetag: 26.09.2008
(51) Int. Cl.: B60L 3/00, B60L 3/04, H02M 7/00, B60K 28/14, B60R 21/00

(54) **VERFAHREN UND VORRICHTUNG ZUR BEGRENZUNG DES EINSCHALTSTROMES UND ZUR ENTLADUNG DES GLEICHSPANNUNGSZWISCHENKREISES**
METHOD AND APPARATUS FOR LIMITING THE SWITCH-ON CURRENT AND FOR DISCHARGING THE DC VOLTAGE INTERMEDIATE CIRCUIT
PROCÉDÉ ET DISPOSITIF PERMETTANT DE LIMITER UN COURANT DE DÉMARRAGE ET DE DÉCHARGER UN CIRCUIT INTERMÉDIAIRE DE TENSION CONTINUE

(30) Priorität: 05.10.2007 DE 102007047713
(43) Veröffentlichungstag der Anmeldung: 21.07.2010
(73) Patentinhaber: Robert Bosch GmbH, 70442 Stuttgart (DE)
(72) Erfinder: DITTMER, Bernd, 71640 Ludwigsburg (DE); WINTER, Arnold, 70794 Filderstadt (DE); MIKULEC, Dragan, 70372 Stuttgart (DE)
(86) Internationale Anmeldenummer: PCT/EP2008/062886
(87) Internationale Veröffentlichungsnummer: WO 2009/047129

(56) Entgegenhaltungen:
- DD-A1- 278 453
- DD-A1- 278 453
- DE-A1- 4 323 604
- DE-A1- 4 323 604
- US-A1- 2004 145 338
- US-A1- 2004 145 338
- US-A1- 2004 160 792
- US-A1- 2004 160 792

## Beschreibung

### Offenbarung der Erfindung

Die Erfindung betrifft Verfahren und Vorrichtungen zur Entladung des Hochspannungsnetzes, insbesondere in einem Hybridfahrzeug oder einem Elektrostraßenfahrzeug.

### Stand der Technik

In einem Hybridfahrzeug bzw. Elektrofahrzeug kommen Spannungen zum Einsatz, die größer sind als 60V Gleichspannung. Diese Spannungen werden im Fahrzeug als Hochspannung bezeichnet und sind die Ursache für gefährliche Körperströme. Das Hochspannungsnetz auch Gleichspannungszwischenkreis genannt, in einem Hybridfahrzeug bzw. Elektrofahrzeug besteht im einfachsten Fall aus einer Batterie, einem Spannungsumrichter mit Gleichspannungszwischenkreiskondensator, einer oder mehreren elektrischer Maschinen, weiteren Hochspannungsverbrauchern wie beispielsweise einem elektrischen Klimakompressor und einem Kabelbaum der alle Hochspannungskomponenten miteinander verbindet. Der Spannungsumrichter benötigt für seine Funktion einen Gleichspannungszwischenkreiskondensator mit ausreichend großer Kapazität. Um beim Zuschalten der Hochspannungsbatterie an das Hochspannungsnetz, an dem auch der Gleichspannungszwischenkreiskondensator angeschlossen ist, einen Kurzschluss- bzw. Überstrom zu vermeiden, wird der Gleichspannungszwischenkreiskondensator über einen Vorladewiderstand, welcher sich üblicherweise in der Batterie befindet, aufgeladen. Nach Ablauf der Vorladezeit für den Gleichspannungszwischenkreis, wird das eigentliche Hauptschütz geschlossen und der Vorladewiderstand überbrückt. Nach der Abschaltung des Hochspannungssystems, beispielsweise durch die Trennung der Hochspannungsbatterie von dem Hochspannungsnetz, müssen alle Kapazitäten die an den Gleichspannungszwischenkreis angeschlossen sind, entladen werden. Hierzu wird üblicherweise eine separate Entladeschaltung verwendet - im einfachsten Fall ein ohmscher Entladewiderstand, der permanent parallel zum Zwischenkreiskondensator geschaltet ist.

Eine Vorrichtung zur schnellen Entladung eines auf höherer Spannung liegenden Zwischenkreiskondensators ist aus der DE 10 2004 057 693 A1 bekannt. Bei der bekannten Lösung wird ein Gleichspannungswandler eingesetzt, bei dem die niederspannungsseitige Spannung zum Abbau von Spannungsspitzen erhöht wird. Zum Abbau der Spannungsspitzen wird batterieseitig ein Widerstand mittels eines Schalters zwischen den Gleichspannungswandler und Masse geschaltet.

Die Patentschrift DD 278 453 offenbart den Gegenstand des Oberbegriffs der unabhängigen Ansprüche 1 und 6.

### Aufgabe der Erfindung

Die Aufgabe der Erfindung besteht darin, durch einfache und kostengünstige Mittel eine sichere und schnelle Entladung aller Kapazitäten im Gleichspannungszwischenkreis zu ermöglichen, bei gleichzeitiger Einsparung bzw. Reduzierung von Bauraum.

### Zusammenfassung

Der Vorteil der Erfindung ist, dass bei den erfindungsgemäßen Verfahren bzw. den zugehörigen Vorrichtungen für die Entladung aller Kapazitäten, die am Gleichspannungszwischenkreis angeschlossen sind, der bereits vorhandene Vorladewiderstand, welcher sich üblicherweise in der Batterie befindet, benutzt wird. Da der Vorladewiderstand bereits vorhanden ist, wird eine zusätzliche Entladeschaltung nicht benötigt bzw. kann in der Dimensionierung deutlich reduziert werden.

Ein weiterer Vorteil ist, dass der Vorladewiderstand üblicherweise so dimensioniert ist, dass eine Entladung in einer sehr kurzen Entladezeit möglich ist, üblicherweise deutlich schneller als mit einer separaten Entladeschaltung.

Durch die Möglichkeit der schnellen Zwischenkreisentladung, wird die Personengefährdung durch Hochspannung deutlich reduziert, beispielsweise im Crash-Fall. Die Entladezeit ist mit dieser Erfindung, weitaus kleiner, als bei aus dem Stand der Technik bekannten Lösungen.

Ein weiterer Vorteil der Erfindung ist die allgemein geforderte sehr hohe Fahrzeugverfügbarkeit sicher gestellt wird. Das bedeutet, dass während dem Start des Hybridfahrzeugs, durch das Aufladen der Zwischenkreiskapazitäten, keine für den Fahrer spürbare zeitliche Verzögerung auftreten. Daher sind die Vorladewiderstände ausreichend groß zu dimensionieren, so dass ein Aufladevorgang der Zwischenkreiskapazitäten normalerweise in ca. 100[ms] abgeschlossen ist.

Die Anforderungen an die Hochspannungssicherheit und die gesetzlichen Vorgaben, fordern eine schnelle Entladung des Zwischenkreises, wenn das Hochspannungsnetz abgeschaltet wird, nicht nur im Normalbetrieb sondern insbesondere auch im Crash-Fall werden in vorteilhafter Weise erfüllt. Diese Entladezeiten der Zwischenkreiskapazitäten sind gegenüber den aus dem Stand der Technik bekannten Lösungen um einen Faktor 10 kürzer.

Der besondere Vorteil der Erfindung die gleichzeitige Nutzung der Vorladewiderstände für den Auflade- und Entladevorgang des Zwischenkreises. Zur Erreichung einer Entladezeit in der gleichen Größenordnung, wie sie mit den Vorladewiderständen realisiert werden soll, müsste bei den aus dem Stand der Technik ein zusätzlicher separater Widerstand eingesetzt werden, daher hat die erfindungsgemäße Lösung einen Wettbewerbsvorteil bei gleichzeitiger Kostenreduzierung.

Das Haupteinsatzgebiet für die erfindungsgemäßen Lösungen sind Elektrofahrzeuge, Hybridfahrzeuge und Brennstoffzellenfahrzeuge, die über einen Gleichspannungszwischenkreis verfügen und die vorhandenen Energiespeicher (Zwischenkreiskapazitäten, Super-Caps) über Vorladewiderstände aufgeladen werden.

Ein weiteres Einsatzgebiet sind Batterien, speziell Hochspannungsbatterien für Elektrofahrzeuge, Hybridfahrzeuge und Brennstoffzellenfahrzeuge, weil sich die Vorladewiderstände für den Gleichspannungszwischenkreis in Elektrofahrzeugen, Hybridfahrzeugen und Brennstoffzellenfahrzeugen üblicherweise innerhalb des Hochspannungsbatteriegehäuses befinden.

### Zeichnung

Ausführungsbeispiele werden anhand der Figuren 1 bis 6 der Zeichnung dargestellt. Dabei zeigt Figur 1 zeigt das Prinzip des Auflade- und Entladevorgangs. Die Figur 2 zeigt wie die Zwischenkreisentladung über einen Vorladewiderstand im Pluszweig der Hochspannungsbatterie erfolgt. In Figur 3 ist eine Möglichkeit der Zwischenkreisentladung über einen Vorladewiderstand im Minuszweig der Hochspannungsbatterie dargestellt. Die Figuren 4 und 5 zeigen weitere Möglichkeiten der Zwischenkreisentladung über einen Vorladewiderstand im Pluszweig bzw. im Minuszweig der Hochspannungsbatterie. In Figur 6 ist eine weitere Ausführungsvariante dargestellt.

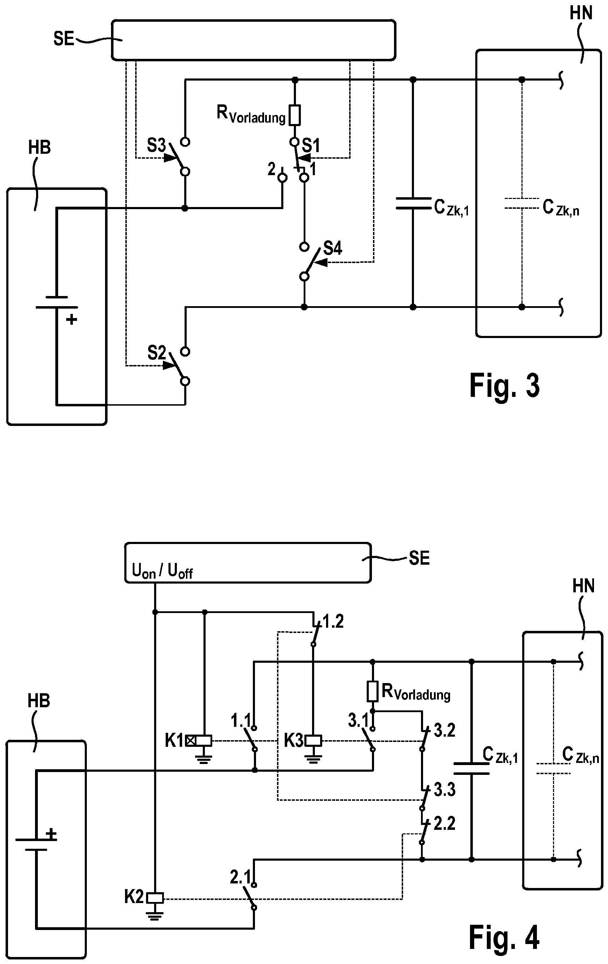

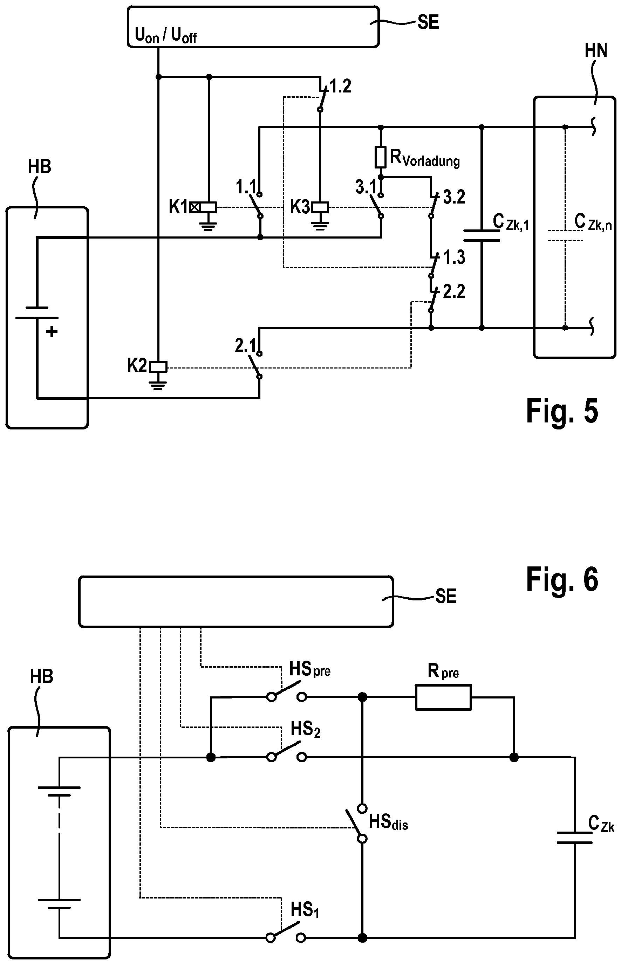

In den Ausführungsbeispielen nach Figur 4 und 5 werden folgende Schaltzeichen für die Zwischenkreisentladung verwendet, in den übrigen Ausführungsbeispielen sind nur die Schließkontakte S1 bis S4 der Schaltgeräte angegeben.

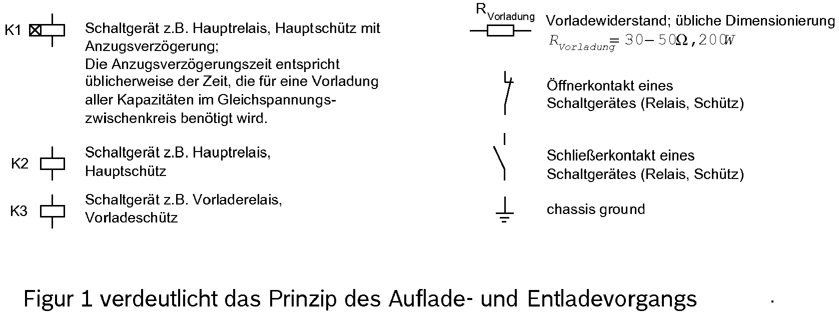

Das Hochspannungsnetz HN ist mit der Hochspannungsbatterie HB über geeignete Leitungen in verbindbar. In den Leitungen sind verschiedene Schaltmittel bzw. Schaltgeräte angeordnet, wobei jeweils nur die Schließerkontakte S1 bis S4 dargestellt sind. Die Ansteuerung der Schaltgeräte bzw. die Betätigung der Schließerkontakte S1 bis S4 erfolgt mittels einer Steuereinheit SE. Die Kapazitäten im Gleichspannungszwischenkreis des Hochspannungsnetzes sind mit C_{Zk,1} bis C_{Zk,n} bezeichnet. Ein bzw. mehrere Vorladewiderstände R_{Vorladung} sind durch geeignete Ansteuerung der Schütze über die Schließerkontakte S1 bis S4 mit vorgebbaren Anschlüssen der Hochspannungsbatterie HB verbindbar, wobei ein oder mehrere Vorladewiderstände R_{Vorladung} zuschaltbar sind, wobei die Anordnung des oder der Vorladewiderstände R_{Vorladung} so erfolgt, dass das Verfahren zur Entladung des Hochspannungsnetzes erfolgen kann.

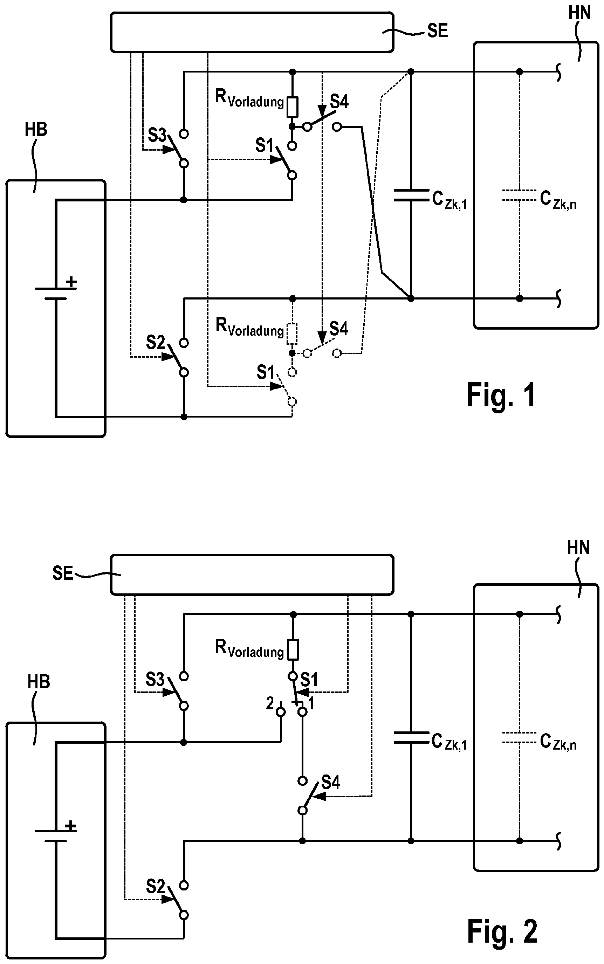

Die Kapazitäten im Gleichspannungszwischenkreis des Hochspannungsnetzes werden im einfachsten Fall über einen bzw. mehrere Vorladewiderstände R_{Vorladung} aufgeladen. Für den Aufladevorgang kommen Vorladeschütze zum Einsatz, welche über einen einfachen Schließerkontakt S1 verfügen. Für die Vorladung des Gleichspannungszwischenkreises gibt es drei Varianten. Das Vorladeschütz samt Vorladewiderstand befindet sich dabei wie in Figur 1 dargestellt, entweder im Pluszweig und oder im Minuszweig, wobei auch möglich ist, dass ein Vorladewiderstand im Pluszweig und einer im Minuszweig liegt.

Für den Entladevorgang kommen Entladeschütze zum Einsatz, welche ebenfalls über einen einfachen Schließerkontakt bzw. Schalter S4 verfügen. Wesentlich ist, dass für die Entladung aller Kapazitäten, die am Gleichspannungszwischenkreis angeschlossen sind, diese über die vorhandenen Vorladewiderstände R_{Vorladung} und über die Schließerkontakte S4 der Entladeschütze kurzgeschlossen und dadurch entladen werden. Dabei erfolgt die Entladung je nach Art der Variante unterschiedlich. Die Steuerung für den Auflade- bzw. Entladevorgang wird von der Steuereinheit SE übernommen.

Weitere Ausführungsbeispiele: Eine Ausführungsvariante 1 ist in Figur 2 dargestellt. Die Zwischenkreisentladung erfolgt hier über einen Vorladewiderstand R_{Vorladung} im Pluszweig der Hochspannungsbatterie. Die Kapazitäten im Gleichspannungszwischenkreis C_{Zk,1} bis C_{Zk,n} des Hochspannungsnetzes HN werden dann im einfachsten Fall über einen Wechselschalter S1 aufgeladen bzw. entladen. Für die Entladung wird ein zusätzlicher Hilfsschalter S4 verwendet. Die Steuerung für den Auflade- bzw. Entladevorgang wird von einer Steuereinheit SE übernommen.

Aufladevorgang: Die Kapazitäten C_{Zk,1} bis C_{Zk,n} im Gleichspannugszwischenkreis des Hochspannungsnetzes HN werden über den Wechselschalter S1 in Schalterstellung 2 aufgeladen, wenn zusätzlich der Hauptschalter S2 geschlossen wird. Nachdem die Kapazitäten im Gleichspannungszwischenkreis C_{Zk,1} bis C_{Zk,n} aufgeladen sind, wird der Hauptschalter S3 geschlossen und der Vorladewiderstand überbrückt. Das Hochspannungsnetz ist jetzt Betriebsbereit und über den Vorladewiderstand fließt kein Strom I, d.h. die Verlustleistung im Vorladewiderstand *P_{V}* = *I*^{2 ∗} *R_{Vorladung}* ist Null.

Entladevorgang: Nach dem Öffnen der Hauptschalter S2 und S3, werden die Kapazitäten C_{zk,1} bis C_{zk,n} im Gleichspannugszwischenkreis über den Wechselschalter S1 in Schalterstellung 1 entladen, wenn zusätzlich der Hilfsschalter S4 geschlossen wird. Der Hilfsschalter S4 soll die Kurzschlussgefahr beim Schalten verhindern bzw. dient dazu eine Entladung der Kapazitäten C_{Zk,1} bis C_{Zk,n} im Gleichspannugszwischenkreis gezielt anzusteuern, wenn dieses erforderlich ist. Beispielsweise ist es im Notfallbetrieb, wenn nach Lastabwurf der Hochspannungsbatterie, die Hochspannungsverbraucher im Hochspannungsnetz über den elektrischen Antrieb weiterversorgt werden sollen, nicht sinnvoll und nicht erforderlich die Gleichspannungszwischenkreisentladung durchzuführen.

Anstatt der Zwischenkreisentladung über einen Vorladewiderstand R_{Vorladung} im Pluszweig kann die Zwischenkreisentladung auch über einen Vorladewiderstand R_{Vorladung} im Minuszweig stattfinden. Figur 3 zeigt eine Schaltung zur Zwischenkreisentladung über einen Vorladewiderstand im Minuszweig der Hochspannungsbatterie.

Eine Ausführungsvariante 2 ist in den Figuren 4 und 5 dargestellt. Das Hochspannungsnetz wird hier über die als Control Unit bezeichnete Steuereinheit ES kontrolliert ein- bzw. ausgeschaltet. Bei der in Figur 4 dargestellten Schaltung Zwischenkreisentladung erfolgt die Entladung über einen Vorladewiderstand im Pluszweig der Hochspannungsbatterie HB und Figur 5 zeigt eine Schaltung zur Zwischenkreisentladung über einen Vorladewiderstand im Minuszweig der Hochspannungsbatterie HB.

Aufladevorgang: Durch das Einschaltsignal U_{ON} der Steuereinheit SE, werden die Schütze K2 und K3 aktiviert, d.h. die Schließerkontakte 2.1 und 3.1 der Schütze K2 und K3 werden geschlossen, während die Öffnerkontakte 2.2 und 3.2 entsprechend geöffnet werden. Das Schütz K1 wird über das Einschaltsignal U_{ON} der Steuereinheit aktiviert, schaltet aber erst nach Ablauf der Anzugsverzögerungszeit ein. Die Kapazitäten im Gleichspannungszwischenkreis C_{Zk,1} bis C_{Zk,n} werden über den Vorladewiderstand R_{Vorladung} geladen. Nach Ablauf der Anzugsverzögerungszeit, schließt der Schließerkontakt 1.1 des Schützes K1, während die Öffnerkontakte 1.2 und 1.3 von K1 entsprechend öffnen. Das Öffnen des Öffnerkontakts 1.2 hat zur Folge, dass das Schütz K3 deaktiviert wird. Durch den Schließerkontakt 1.1 des Schützes K1, wird der Vorladewiderstand R_{Vorladung} überbrückt. Das Hochspannungsnetz ist jetzt Betriebsbereit und über den Vorladewiderstand R_{Vorladung} fließt kein Strom I, d.h. die Verlustleistung *P_{V}* = *I*^{2 ∗} *R_{Vorladung}* im Vorladewiderstand R_{Vorladung} ist Null.

Entladevorgang: Durch das Ausschaltsignal U_{OFF} der Steuereinheit, werden die Schütze K1, K2 und K3 deaktiviert. Durch die Öffnerkontakte 1.3, 2.2 und 3.2 ist der Stromkreis für die Entladung der Kapazitäten im Gleichspannungszwischenkreis C_{Zk,1} bis C_{Zk,n} über den Vorladewiderstand R_{Vorladung} kurzgeschlossen. Die Kapazitäten im Gleichspannungszwischenkreis C_{Zk,1} bis C_{Zk,n} werden über den Vorladewiderstand R_{Vorladung} entladen.

Die Öffnerkontakte 1.3, 2.2 und 3.2 dienen zur Systemsicherheit, damit durch Fehlfunktion der Schütze, sowie bei Lastabwurf der Hochvoltbatterie und entsprechender Notlauffunktionen, z.B. Aufrechterhaltung des Hochvoltnetzes für weitere Hochvoltverbraucher, die Entladung unterbunden wird.

Die Ausführungsbeispiele beschreiben den allgemeinen Fall. Der Vorladewiderstand kann, muss aber nicht unbedingt in der Batterie angeordnet sein bzw. Bestandteil der Batterie sein. Gleiches gilt für die eingesetzten elektrischen Schalter und Schütze. Wesentlich ist, dass die Energiespeicher bzw. Hochspannungsbatterien im Hochvolt-Netz über den oder die Vorladewiderstände aufgeladen werden. Ganz allgemein gilt dabei, dass ein elektrischer Kontaktschalter den Stromkreis so schließt, dass der Vorladewiderstand parallel zum Zwischenkreiskondensator liegt.

In Figur 6 ist eine weitere Ausführungsvariante ohne eigenes Hochspannungsnetz dargestellt. Die Hochspannungsbatterie HB ist hier über das Vorladeschütz HSᵥₒᵣ mit dem Vorladewiderstand R_{Vorladung} verbindbar und über das Hauptschütz HS₂ kann eine Verbindung zwischen der Hochspannungsbatterie HB und dem Verbindungspunkt zwischen dem Vorladewiderstand R_{Vorladung} und der Kapazität C_{Zk} hergestellt werden. Weitere Hauptschütze HS₁ und HS ermöglichen eine Verbindung dem Minuspol der Hochspannungsbatterie HB und dem Vorladewiderstand R_{Vorladung}.

Der Vorladewiderstand R_{Vorladung}. und/oder die Vorladewiderstaände und /oder die Schalter bzw. Schütze sowie gegebenenfalls auch die Steuereinheit SE können, müssen aber nicht Bestandteil der Hochspannungsbatterie HB sein und beispielsweise auch innerhalb des Batteriegehäuses liegen. Wesentlich ist, dass der oder die Energiespeicher im Hochspannungsnetz über den oder die Vorladewiderstände aufgeladen werden und über den oder die selben Vorladewiderständen auch schnell entladen werden können. Der allgemeinen Fall ist, dass ein elektrischer Kontaktschalter den Stromkreis so schließt, dass der Vorladewiderstand parallel zum Zwischenkreiskondensator liegt.

Bei einem Einsatz der erfindungsgemäßen Verfahren oder Vorrichtungen in einem Elektro-, Hybrid- oder Brennstoffzellenfahrzeugfahrzeug ist zu beachten, dass die allgemein geforderte sehr hohe Fahrzeugverfügbarkeit sicher zu stellen ist. Das bedeutet, dass während dem Start des Hybridfahrzeugs, durch das Aufladen der Zwischenkreiskapazitäten, keine für den Fahrer spürbare zeitliche Verzögerung auftreten dürfen. Daher sind die Vorladewiderstände ausreichend groß zu dimensionieren, so dass ein Aufladevorgang der Zwischenkreiskapazitäten normalerweise in ca. 100 [ms] abgeschlossen ist. Dies ermöglicht aber auch eine schnelle Entladung der Zwischenkreiskapazitäten über die Vorladewiderstände.

Die Anforderungen an die Hochspannungssicherheit und die gesetzlichen Vorgaben, fordern eine schnelle Entladung des Zwischenkreises, wenn das Hochspannungsnetz abgeschaltet wird, nicht nur im Normalbetrieb sondern insbesondere auch im Crash-Fall werden in vorteilhafter Weise erfüllt. Diese schnellen Entladezeiten der Zwischenkreiskapazitäten über die ausreichend groß zu dimensionieren Vorladewiderstände sind gegenüber den aus dem Stand der Technik bekannten Lösungen, die Entladezeiten von einer Sekunde ermöglichen, um einen Faktor 10 kürzer.

## Patentansprüche

1. Verfahren zur Entladung eines Hochspannungsnetzes (HN), insbesondere eines Gleichspannungszwischenkreises, das bzw. der mit einer Energiequelle (HB) über wenigstens einen Widerstand (R_{Vorladung}) verbindbar ist, wobei der wenigstens eine Widerstand (R_{Vorladung}) als gemeinsamer Widerstand sowohl für den Auflade- oder Vorladevorgang als auch für den Entladevorgang der Zwischenkreiskapazitäten (C_{Zk,n}) des Gleichspannungszwischenkreises verwendet wird, wobei zum Trennen der Energiequelle (HB) von den Zwischenkreiskapazitäten (C_{Zk,n}) mindestens ein Schalter (S1) betätigt wird und ein Hilfsschalter (S4) dazu dient, die Entladung der Zwischenkreiskapazitäten (C_{Zk,n}) im Gleichspannungszwischenkreis anzusteuern oder nicht durchzuführen, **dadurch gekennzeichnet, dass** der Hilfsschalter (S4) dazu dient, dass die Entladung in einem Notfallbetrieb nicht durchgeführt wird, wobei der Notfallbetrieb derart gekennzeichnet ist, dass nach Lastabwurf der Energiequelle (HB) die Hochspannungsverbraucher im Hochspannungsnetz (HN) über einen elektrischen Antrieb weiterversorgt werden.

2. Verfahren nach Anspruch 1, **dadurch gekennzeichnet, dass** für den Auflade- bzw. Vorladevorgang der Widerstand seriell mit den Kapazitäten des Gleichspannungszwischenkreises verbunden wird und für den Entladevorgang der Widerstand nicht mehr seriell, sondern parallel mit den Kapazitäten verbunden wird, wobei dies durch eine geeignete Ansteuerung der Schaltmittel erreicht wird.

3. Verfahren nach einem der vorhergehenden Ansprüche, **dadurch gekennzeichnet, dass** der wenigstens eine Widerstand über von einer Steuereinheit ansteuerbare Schaltmittel wahlweise mit vorgebbaren Seiten der Energiequelle verbunden wird, wodurch durch den gleichen Widerstand je nach Schaltzustand der Schaltmittel ein Auflade- bzw. Vorladevorgang oder Entladevorgang durchgeführt wird.

4. Verfahren nach einem der vorhergehenden Ansprüche **dadurch gekennzeichnet, dass** es zur Entladung eines Hochspannungsnetzes, insbesondere eines Gleichspannungszwischenkreises in einem Hybrid- oder Elektro- oder Brennstoffzellenfahrzeug eingesetzt wird.

5. Verfahren nach einem der vorhergehenden Ansprüche, **dadurch gekennzeichnet, dass** die Entladung im Normalbetrieb bei Bedarf erfolgt oder wenn ein Unfall erkannt wird.

6. Vorrichtung zur Entladung eines Hochspannungsnetzes (HN), insbesondere eines Gleichspannungszwischenkreises, das bzw. der mit einer Energiequelle (HB) über wenigstens einen Widerstand (R_{Vorladung}) verbindbar ist, wobei der wenigstens eine Widerstand (R_{Vorladung}) sowohl für den Auflade- oder Vorladevorgang als auch für den Entladevorgang der Zwischenkreiskapazitäten (C_{Zk,n}) des Gleichspannungszwischenkreises verwendet wird,
**wobei** Mittel zum Trennen der Energiequelle (HB) von den Zwischenkreiskapazitäten (C_{Zk,n}) vorhanden sind und dazu mindestens ein Schalter (S1) betätigt wird und ein Hilfsschalter (S4) dazu dient, die Entladung der Zwischenkreiskapazitäten (C_{Zk,n}) im Gleichspannungszwischenkreis anzusteuern oder nicht durchzuführen, **dadurch gekennzeichnet, dass** der Hilfsschalter (S4) dazu dient, die Vorrichtung so anzusteuern, dass die Entladung in einem Notfallbetrieb nicht durchgeführt wird, wobei der Notfallbetrieb derart gekennzeichnet ist, dass nach Lastabwurf der Hochspannungsbatterie (HB) die Hochspannungsverbraucher im Hochspannungsnetz (HN) über einen elektrischen Antrieb weiterversorgt werden.

7. Vorrichtung nach Anspruch 6, **dadurch gekennzeichnet, dass** der wenigstens eine Widerstand im Pluszweig oder im Minuszweig liegt und mit der Plus- oder Minusseite der Energiequelle verbindbar ist.

8. Vorrichtung nach Anspruch 6, **dadurch gekennzeichnet, dass** ein Widerstand im Pluszweig und ein weiterer Widerstand im Minuszweig liegt und jeweils mit der Plus- oder Minusseite der Energiequelle verbindbar ist.

9. Vorrichtung nach Anspruch 7 oder 8, **dadurch gekennzeichnet, dass** als Energiequelle eine Batterie, eine Hochspannungsbatterie, eine Batterie mit nachgeschaltetem DC/DC-Wandler oder eine Brennstoffzelle dient.

10. Vorrichtung nach einem der vorhergehenden Ansprüche 6 bis 9, **dadurch gekennzeichnet, dass** der wenigstens eine Vorladewiderstand so dimensioniert ist, dass die Spannung des Gleichspannungszwischenkreises in weniger als einer Sekunde, vorzugsweise 0,1 Sekunden auf ungefährliche Spannungswerte verringert wird.

11. Vorrichtung nach einem der vorhergehenden Ansprüche 6 bis 10, **dadurch gekennzeichnet, dass** der wenigstens eine Widerstand, und/oder die Schaltmittel und/oder die Steuereinrichtung Bestandteil der Hochspannungsbatterie sind und insbesondere im Inneren eines Batteriegehäuses angeordnet sind.

## Claims

1. Method for discharging a high-voltage power supply system (HN), in particular a DC voltage intermediate circuit, which can be connected to an energy source (HB) by means of at least one resistor (R_{precharge}), wherein the at least one resistor (R_{precharge})is used as a joint resistor both for the charging or precharging process and for the discharging process of the intermediate circuit capacitances (C_{Zk,n}) of the DC voltage intermediate circuit, wherein, to isolate the energy source (HB) from the intermediate circuit capacitances (C_{Zk,n}), at least one switch (S1) is actuated and an auxiliary switch (S4) serves to actuate or to not carry out the discharging of the intermediate circuit capacitances (C_{Zk,n}) in the DC voltage intermediate circuit, **characterized in that** the auxiliary switch (S4) is used such that the discharging is not carried out in an emergency operation, wherein the emergency operation is **characterized in** such a way that the high-voltage loads in the high-voltage power supply system (HN) continue to be supplied with power by means of an electric drive after load shedding of the energy source (HB).

2. Method according to Claim 1, **characterized in that** the resistor is connected in series with the capacitances of the DC voltage intermediate circuit for the charging or precharging process and the resistor is no longer connected in series but instead in parallel with the capacitances for the discharging process, wherein this is achieved by way of suitable actuation of the switching means.

3. Method according to either of the preceding claims, **characterized in that** the at least one resistor is connected to predefinable sides of the energy source selectively by means of switching means that can be actuated by a control unit, as a result of which a charging or precharging process or discharging process is carried out by the same resistor depending on the switching state of the switching means.

4. Method according to one of the preceding claims, **characterized in that** said method is used to discharge a high-voltage power supply system, in particular a DC voltage intermediate circuit in a hybrid or electric or fuel-cell vehicle.

5. Method according to one of the preceding claims, **characterized in that** the discharging takes place during normal operation as required or when an accident is identified.

6. Apparatus for discharging a high-voltage power supply system (HN), in particular a DC voltage intermediate circuit, which can be connected to an energy source (HB) by means of at least one resistor (R_{precharge}), wherein the at least one resistor (R_{precharge})is used both for the charging or precharging process and for the discharging process of the intermediate circuit capacitances (C_{Zk,n}) of the DC voltage intermediate circuit, wherein means for isolating the energy source (HB) from the intermediate circuit capacitances (C_{Zk,n}) are provided and at least one switch (S1) is actuated and an auxiliary switch (S4) serves to actuate or to not carry out the discharging of the intermediate circuit capacitances (C_{Zk,n}) in the DC voltage intermediate circuit, **characterized in that** the auxiliary switch (S4) serves to actuate the apparatus so that the discharging is not carried out in an emergency operation, wherein the emergency operation is **characterized in** such a way that the high-voltage loads in the high-voltage power supply system (HN) continue to be supplied with power by means of an electric drive after load shedding of the high-voltage battery (HB).

7. Apparatus according to Claim 6, **characterized in that** the at least one resistor is located in the positive branch or in the negative branch and can be connected to the positive or negative side of the energy source.

8. Apparatus according to Claim 6, **characterized in that** one resistor is located in the positive branch and a further resistor is located in the negative branch and can be connected to the positive or negative side of the energy source respectively.

9. Apparatus according to Claim 7 or 8, **characterized in that** a battery, a high-voltage battery, a battery with a downstream DC/DC converter or a fuel cell serves as the energy source.

10. Apparatus according to one of the preceding Claims 6 to 9, **characterized in that** the at least one precharging resistor is dimensioned so that the voltage of the DC voltage intermediate circuit is reduced to safe voltage values in less than one second, preferably 0.1 seconds.

11. Apparatus according to one of the preceding Claims 6 to 10, **characterized in that** the at least one resistor and/or the switching means and/or the control device are a constituent part of the high-voltage battery and are arranged, in particular, inside a battery housing.

## Revendications

1. Procédé permettant de décharger un réseau haute tension (HN), en particulier un circuit intermédiaire à courant continu, qui peut être relié à une source d'énergie (HB) par l'intermédiaire d'au moins une résistance (R_{précharge}), dans lequel ladite au moins une résistance (R_{précharge}) est utilisée en tant que résistance commune à la fois pour l'opération de charge ou de précharge et pour l'opération de décharge des condensateurs de circuit intermédiaire (C_{Zk,n}) du circuit intermédiaire à courant continu, dans lequel au moins un commutateur (S1) est actionné pour déconnecter la source d'énergie (HB) des condensateurs de circuit intermédiaire (C_{Zk,n}), et un commutateur auxiliaire (S4) sert à déclencher ou non la décharge des condensateurs de circuit intermédiaire (C_{Zk,n}) dans le circuit intermédiaire à tension continu,
**caractérisé en ce que** le commutateur auxiliaire (S4) sert à empêcher la décharge d'être effectuée lors d'un fonctionnement de secours, dans lequel le fonctionnement de secours est **caractérisé en ce que** les consommateurs haute tension du réseau haute tension (HN) sont alimentés par un entraînement électrique après la perte de charge de la source d'énergie (HB).

2. Procédé selon la revendication 1, **caractérisé en ce que**, pour l'opération de charge ou de précharge, la résistance est connectée en série aux condensateurs du circuit intermédiaire à courant continu et, pour l'opération de décharge, la résistance n'est plus connectée en série mais en parallèle avec les condensateurs, dans lequel ceci est réalisé par une commande appropriée des moyens de commutation.

3. Procédé selon l'une des revendications précédentes, **caractérisé en ce que** ladite au moins une résistance est reliée sélectivement à des côtés pouvant être prédéterminés de la source d'énergie par l'intermédiaire de moyens de commutation qui peuvent être actionnés par une unité de commande, de telle sorte qu'une opération de charge ou de précharge ou de décharge est effectuée par la même résistance selon l'état de commutation des moyens de commutation.

4. Procédé selon l'une des revendications précédentes, **caractérisé en ce qu'**il est mis en oeuvre pour décharger un réseau haute tension, en particulier un circuit intermédiaire à courant continu, dans un véhicule hybride ou électrique ou à pile à combustible.

5. Procédé selon l'une des revendications précédentes, **caractérisé en ce que** la décharge est effectuée en fonctionnement normal lorsque cela est nécessaire ou lorsqu'un accident est détecté.

6. Dispositif permettant de décharger un réseau haute tension (HN), en particulier un circuit intermédiaire à courant continu, qui peut être relié à une source d'énergie (HB) par l'intermédiaire d'au moins une résistance (R_{précharge}), dans lequel ladite au moins une résistance (R_{précharge}) est utilisée à la fois pour l'opération de charge ou de précharge et pour l'opération de décharge des condensateurs de circuit intermédiaire (C_{Zk,n}) du circuit intermédiaire à courant continu,
dans lequel il est prévu des moyens pour séparer la source d'énergie (HB) des condensateurs de circuit intermédiaire (C_{Zk,n}) et au moins un commutateur (S1) est actionné à cet effet et un commutateur auxiliaire (S4) est utilisé pour déclencher ou non la décharge des condensateurs de circuit intermédiaire (C_{Zk,n}) dans le circuit intermédiaire à courant continu,
**caractérisé en ce que** le commutateur auxiliaire (S4) sert à commander le dispositif de telle manière que la décharge ne soit pas effectuée lors d'un fonctionnement de secours, dans lequel le fonctionnement de secours est **caractérisé en ce que** les consommateurs haute tension du réseau haute tension (HN) sont en outre alimentés par un entraînement électrique après la perte de charge de la batterie haute tension (HB).

7. Dispositif selon la revendication 6, **caractérisé en ce que** ladite au moins une résistance est située dans la branche positive ou dans la branche négative et peut être connectée au côté positif ou négatif de la source d'énergie.

8. Dispositif selon la revendication 6, **caractérisé en ce qu'**une résistance se trouve dans la branche positive et une autre résistance se trouve dans la branche négative et **en ce qu'**elles peuvent respectivement être connectées au côté positif ou négatif de la source d'énergie.

9. Dispositif selon la revendication 7 ou 8, **caractérisé en ce qu'**une batterie, une batterie haute tension, une batterie avec un convertisseur DC/DC connecté en aval ou une pile à combustible est utilisée en tant que source d'énergie.

10. Dispositif selon l'une des revendications 6 à 9 précédentes, **caractérisé en ce que** ladite au moins une résistance de précharge est dimensionnée de telle manière que la tension du circuit intermédiaire à courant continu soit réduite à des valeurs de tension inoffensives en moins d'une seconde, de préférence 0,1 seconde.

11. Dispositif selon l'une des revendications 6 à 10 précédentes, **caractérisé en ce que** ladite au moins une résistance et/ou les moyens de commutation et/ou le dispositif de commande font partie de la batterie haute tension et sont disposés notamment à l'intérieur d'un boîtier de batterie.
